# EUROPEAN PATENT SPECIFICATION

(11) **EP 4 462 071 B1**
(45) Date of publication and mention of the grant of the patent: **14.01.2026**
(21) Application number: 24174281.6
(22) Date of filing: 06.05.2024
(51) Int. Cl.: F41H 5/013

(54) **TRAINING SYSTEM - MODULAR AND ADJUSTABLE SHOOT HOUSE**
TRAININGSSYSTEM - MODULARES UND EINSTELLBARES SCHIESSHAUS
SYSTÈME D'ENTRAÎNEMENT - MAISON DE TIR MODULAIRE ET RÉGLABLE

(30) Priority: 08.05.2023 IL 30278023
(43) Date of publication of application: 13.11.2024
(73) Proprietor: N.D.N. Investments Ltd, 7179902 Modiin-Macabim-Reut (IL)
(72) Inventor: SUDAK, Alexander, 7663411 Rehovot (IL)
(74) Representative: Kurig, Thomas

(56) References cited:
- WO-A1-2021/256919
- KR-A- 20050 063 278
- US-A1- 2007 006 542
- US-B2- 10 648 780

## Description

### FIELD OF THE INVENTION

The present invention relates generally to a shoot house for military and law enforcement personnel and, more specifically, to a modular and adjustable shoot house.

### BACKGROUND OF THE INVENTION

Certain personnel such as police and members of the armed forces have jobs that require them to carry and use fire arms, and which require training in realistic settings. To accomplish this, training is often done in structures commonly known as shoot houses. These structures provide for many actual combat situations where trainees must quickly and accurately identify and respond to realistic threats to their safety.

Shoot house walls must be able to withstand the impact of multiple rounds of ammunition. Shoot house walls must also be constructed to prevent bullets from ricocheting off the wall and injuring trainees. Shoot houses have been constructed out of concrete, tires, gravel filled walls, steel walls and multi-layer steel walls. Because of the massive, thick walls used in modern shoot houses, it is difficult and cumbersome to disassemble the shoot house in order to move the walls to other positions.

WO 2021/256919 A1 discloses a ballistic panel for assembling a ballistic wall assembly, including a planar main plate member and two spaced apart L-shaped hook members arranged along a first side edge of the main plate member. Each hook member includes a base portion connected to the first side edge, and a leg portion connected to the base portion extending therefrom parallel to the first side edge toward a top edge of the main plate member. A gap is provided between each leg portion and the first side edge. The main plate member further includes two spaced apart slots each being arranged opposite to a corresponding opposing hook member and extending along a second side edge of the main plate member.

Additionally, US 2007/006542 A1 and KR 2005 0063278 A both disclose training systems with walls being assembled or disassembled by means of dovetail joints.

### SUMMARY OF THE INVENTION

The present invention seeks to provide a modular and adjustable shoot house, as is described more in detail hereinbelow.

There is provided in accordance with the present invention a training system including shoot house walls connected to each other, each of the walls being constructed of a ballistic penetration-resistant material, and each of the walls including front and back surfaces extending from first and second edge connective structures, wherein the first and second edge connective structures include an upright projection received in a crevice that allows for relative vertical motion between adjoining ones of the walls. Said first edge connective structure comprises two edge members that slant outwards towards each other to form an arrow-head shape when viewed from above said walls and said second edge connective structure comprises two edge members that slant inwards towards each other to form an arrow-receptacle shape when viewed from above said walls.

### BRIEF DESCRIPTION OF THE DRAWINGS

The present invention will be understood and appreciated more fully from the following detailed description taken in conjunction with the drawings in which:
Figs. 1A and 1B are simplified illustrations of two adjoining walls of a shoot house, respectively during and after connecting the walls to each other, in accordance with a non-limiting embodiment of the present invention.
Fig. 1C is a simplified illustration of two adjoining walls of the shoot house being connected to each other.
Fig. 1D is an enlarged view of the connecting structure of the two adjoining walls, in accordance with a non-limiting embodiment of the present invention.
Fig. 1E is an enlarged sectional view of one member of the connecting structure.
Figs. 2A and 2B are simplified top-view illustrations of two adjoining walls of the shoot house, respectively during and after connecting the walls to each other.
Fig. 3 is a simplified illustration of a shoot house constructed with the walls of Figs. 1A-1B, in accordance with a non-limiting embodiment of the present invention.

### DETAILED DESCRIPTION OF EMBODIMENTS

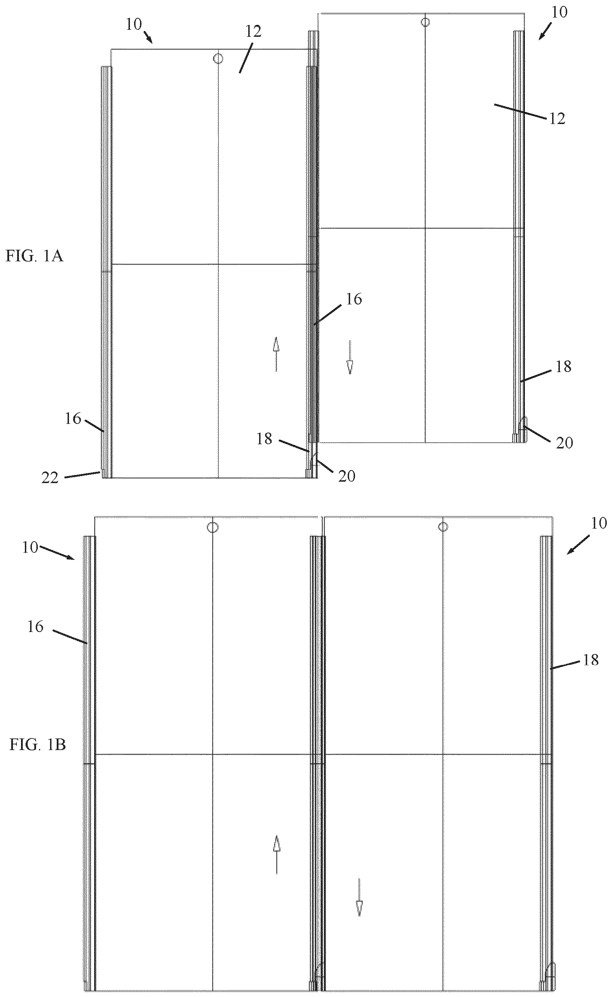

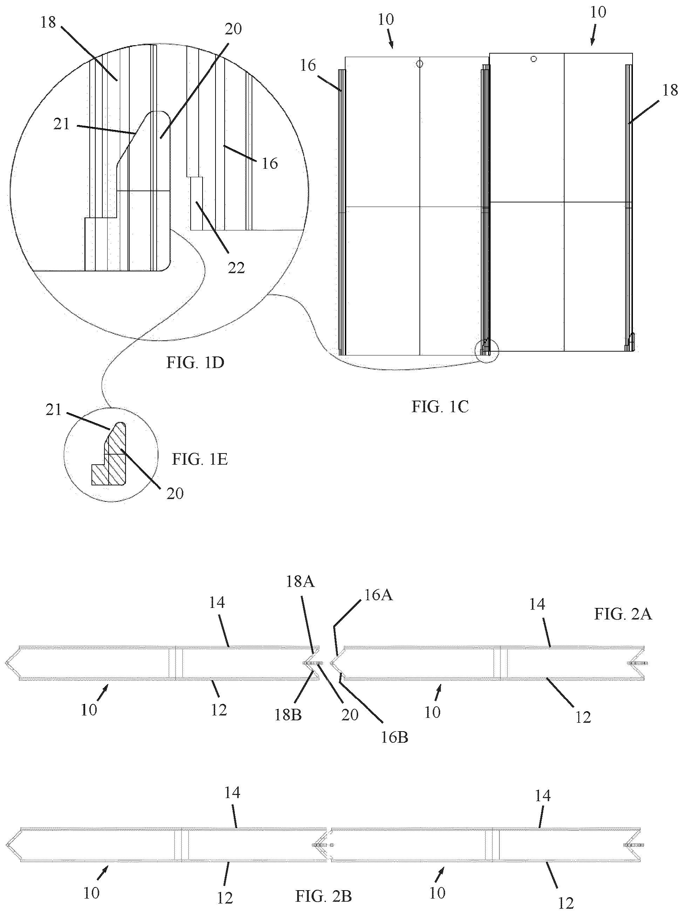

Reference is now made to Figs. 1A-1E and Figs. 2A-2B, which illustrate two adjoining walls 10 of a shoot house, in accordance with a non-limiting embodiment of the present invention.

Each wall 10 may be constructed of a ballistic penetration-resistant material and which may prevent ricochets, such as but not limited to, one or more layers of steel, ballistic elastomeric or fiber materials, such as certain aramid and ultra-high-molecular-weight polyethylene (UHMWPE) fibers, or other ballistic fabric, and/or a synthetic viscoelastic polymer, such as polyisobutene or butyl rubber, and other materials.

Each wall 10 includes front and back surfaces 12 and 14 (Figs. 2A-2B), extending from first and second edge connective structures 16 and 18. The first and second edge connective structures 16 and 18 may include mating male and female connective structures. According to the invention, the first edge connective structure 16 includes two edge members 16A and 16B that slant outwards towards each other to form an arrow-head shape when viewed from the top as seen in Figs. 2A and 2B. The second edge connective structure 18 includes two edge members 18A and 18B that slant inwards towards each other to form an arrow-receptacle shape when viewed from the top as seen in Figs. 2A and 2B. As seen in Fig. 2B, the arrow-head shape of edge members 16A and 16B is received in the arrow-receptacle shape of edge members 18A and 18B when the adjoining walls 10 are connected to each other. Alternatively, other male and female connections may be used.

Reference is made particularly to Fig. 2A. The second edge connective structure 18 may include an upright projection 20 positioned in the arrow-receptacle shape of edge members 18A and 18B. The first edge connective structure 16 may be formed with a crevice or cutout 22 formed in a lower portion of edge members 16A and 16B. When connecting adjoining walls 10, the upright projection 20 is received in the crevice 22. The upright projection 20 may have a chamfered or slanted surface 21 (Figs. 1D and 1E) that facilitates mating with the crevice 22.

The mating connection of upright projection 20 received in the crevice 22 serves multiple purposes. First, the mating connection of upright projection 20 received in the crevice 22 ensures that the adjoining walls are positively connected to each other and are not simply abutting against each other. Second, the mating connection of upright projection 20 received in the crevice 22 allows for relative vertical motion between the adjoining walls; that is, the upright projection 20 can move vertically with respect to the crevice 22 and the crevice 22 can move vertically with respect to the upright projection 20. This is important to compensate for different heights of the mounting surface, as is common in many terrains, such as sandy or rocky terrains. This allows mounting the walls 10 in virtually any environment. Third, the mating connection of upright projection 20 received in the crevice 22 enables quick and easy assembly and disassembly of the walls so that the construction of a shoot house is modular, quick and easy. No tools are required to join the walls together.

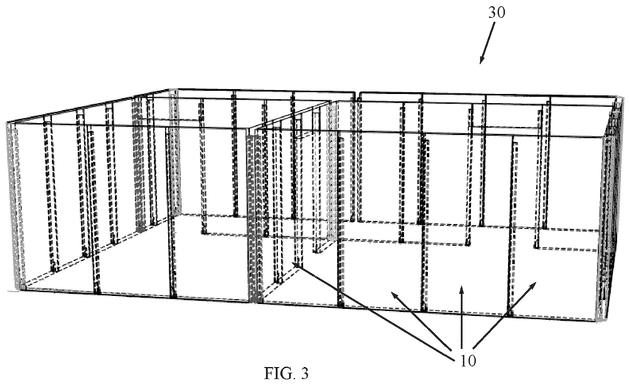

Fig. 3 illustrates a shoot house 30 constructed with the walls 10 of Figs. 1A-1B, in accordance with a non-limiting embodiment of the present invention. Any number and arrangement of wall may be used and adjusted as needed.

## Claims

1. A training system comprising:
shoot house walls (10) connected to each other, each of said walls (10) being constructed of a ballistic penetration-resistant material, and each of said walls (10) comprising front and back surfaces (12, 14) extending from first and second edge connective structures (16, 18), wherein said first and second edge connective structures (16, 18) comprise an upright projection (20) received in a crevice (22) that allows for relative vertical motion between adjoining ones of said walls (10), the training system being **characterized in that**
said first edge connective structure (16) comprises two edge members (16A, 16B) that slant outwards towards each other to form an arrow-head shape when viewed from above said walls (10), and **in that**
said second edge connective structure comprises two edge members (18A, 18B) that slant inwards towards each other to form an arrow-receptacle shape when viewed from above said walls (10).

2. The training system according to claim 1, wherein said first and second edge connective structures (16, 18) comprise mating male and female connective structures.

3. The training system according to any one of claims 1-2, wherein said upright projection (20) is positioned in said second edge connective structure (18) and said crevice (22) is formed in said first edge connective structure (16).

4. The training system according to any one of claims 1-3, wherein said upright projection (20) is formed with a chamfered or slanted surface (21).

5. The training system according to any one of claims 1-4, further comprising a shoot house (30) constructed of said walls (10).

## Patentansprüche

1. Trainingssystem, umfassend:
miteinander verbundene Schießhauswände (10), wobei jede der Wände (10) aus einem ballistisch durchschlagfesten Material konstruiert ist und jede der Wände (10) eine Vorder- und eine Rückfläche (12, 14) umfasst, die sich von einer ersten und einer zweiten Randverbindungsstruktur (16, 18) erstrecken, wobei die erste und die zweite Randverbindungsstruktur (16, 18) einen aufrechten Vorsprung (20) umfassen, der in einer Spalte (22) aufgenommen ist, die eine relative vertikale Bewegung zwischen benachbarten der Wände (10) ermöglicht, wobei das Trainingssystem **dadurch gekennzeichnet ist, dass**
die erste Randverbindungsstruktur (16) zwei Randelemente (16A, 16B) umfasst, die nach außen zueinander geneigt sind, um von oben auf die Wände (10) gesehen eine Pfeilspitzenform zu bilden, und dass
die zweite Randverbindungsstruktur zwei Randelemente (18A, 18B) umfasst, die nach innen zueinander geneigt sind, um von oben auf die Wände (10) gesehen eine Pfeilaufnahmesform zu bilden.

2. Trainingssystem gemäß Anspruch 1, wobei die erste und zweite Randverbindungsstruktur (16, 18) zusammenpassende männliche und weibliche Verbindungsstrukturen umfassen.

3. Trainingssystem gemäß irgendeinem der Ansprüche 1-2, wobei der aufrechte Vorsprung (20) in der zweiten Randverbindungsstruktur (18) positioniert ist und die Spalte (22) in der ersten Randverbindungsstruktur (16) ausgebildet ist.

4. Trainingssystem gemäß irgendeinem der Ansprüche 1-3, wobei der aufrechte Vorsprung (20) mit einer abgeschrägten oder geneigten Fläche (21) ausgebildet ist.

5. Trainingssystem gemäß irgendeinem der Ansprüche 1-4, ferner umfassend ein Schießhaus (30), das aus den Wänden (10) konstruiert ist.

## Revendications

1. Un système d'entraînement comprenant :
des parois de stand de tir (10) reliées les unes aux autres, chacune desdites parois (10) étant construite à partir d'un matériau résistant à la pénétration balistique, et chacune desdites parois (10) comprenant des surfaces avant et arrière (12, 14) s'étendant à partir de première et deuxième structures (16, 18) de connexion de bords, lesdites première et deuxième structures (16, 18) de connexion de bords comprenant une saillie verticale (20) reçue dans une fente (22), qui permet un mouvement vertical relatif entre lesdites parois (10) adjacentes, le système d'entraînement étant **caractérisé en ce que**
ladite première structure (16) de connexion de bord comprend deux éléments de bord (16A, 16B) qui sont inclinés vers l'extérieur l'un vers l'autre pour former une pointe de flèche lorsqu'on les regarde depuis le dessus desdites parois (10), et **en ce que**
ladite deuxième structure de connexion de bord comprend deux éléments de bord (18A, 18B) qui sont inclinés vers l'intérieur l'un vers l'autre pour former une forme de réceptacle de flèche lorsqu'on les regarde depuis le dessus desdites parois (10).

2. Le système d'entraînement selon la revendication 1, dans lequel lesdites première et deuxième structures (16, 18) de connexion de bords comprennent des structures de connexion mâle et femelle s'emboîtant.

3. Le système d'entraînement selon l'une quelconque des revendications 1 à 2, dans lequel ladite saillie verticale (20) est positionnée dans ladite deuxième structure (18) de connexion de bord et ladite fente (22) est formée dans ladite première structure (16) de connexion de bord.

4. Le système d'entraînement selon l'une quelconque des revendications 1 à 3, dans lequel ladite saillie verticale (20) est formée avec une surface chanfreinée ou inclinée (21).

5. Le système d'entraînement selon l'une quelconque des revendications 1 à 4, comprenant en outre un stand de tir (30) construit à partir desdites parois (10).
